# EUROPEAN PATENT APPLICATION

(11) **EP 2 957 952 A1**
(43) Date of publication of application: **23.12.2015**
(21) Application number: 14172504.4
(22) Date of filing: 16.06.2014
(51) Int. Cl.: G02F 1/15

(54) **An electrochromic particle, and an electrochromic device comprising the same**

(71) Applicant: Solvay SA, 1120 Bruxelles (BE)
(72) Inventor: Garcia-Juan, Plácido, 06406 Bernburg (DE); Lacroix, Marc, 1348 Ottignies-Louvain-la-Neuve (BE)
(74) Representative: Mross, Stefan P.M.

(57) **Abstract**

Disclosed are an electrochromic particle comprising a particular conductive nanoparticle and an electrochromic material attached thereto and an electrochromic device comprising the same.

## Description

### TECHNICAL FIELD

The present invention relates to an electrochromic particle comprising a conductive nanoparticle and an electrochromic material attached to a surface of the conductive nanoparticle. The invention also relates to an electrochromic device comprising such electrochromic particles.

### BACKGROUND OF THE INVENTION

Electrochromic devices (ECD) are electrochemical cells that comprise at least electrochromic materials, chemical reaction of which enables change or adjustment of the color as a result of the electrochemical reaction at electrode(s), for instance upon the application of electricity. Electrochromic devices are of commercial interest due to their controllable transmission, absorption and/or reflectance, and thus, have been proposed and used for various applications, such as smart windows, automobile mirrors, displays, and others.

Typical ECD structure comprises a first transparent electrode deposited on a first substrate (e.g., glass or plastic), and a second transparent electrode deposited on another substrate, the second electrode facing to the first transparent electrode side-by-side, as well as an electrochromic layer comprising an electrochromic material, an electrolyte layer (liquid, solid, or gel), and optionally a counter-electrode layer, all sandwiched by the above-mentioned two electrodes.

United States Patent application publication No. US 2014/Ol 18814 A1 discloses a particular type of display device, along with a core-shell electrochromic particle comprising a conductive core material (e.g., indium-tin-oxide (ITO) nanoparticle) and a shell layer (e.g., electrochromic material, such as WO₃ and viologen derivatives) chemically linked to the core material via a linker, such as 3-aminopropyltriethoxylsilane, dispersed in the electrolyte in such a device, and use thereof as the color-switching element operated with voltage application.

### DESCRIPTION OF THE INVENTION

The purpose of the present invention is to provide a novel electrochromic particle which can be suitably used in electrochromic device (ECD) application. Another purpose is to provide the particular conductive nanomaterial which can be effectively combined with the electrochromic material in the core-shell electrochromic particle, and be advantageously used in electrochromic device, particularly in electrochromic display.

The present invention relates to an electrochromic particle comprising a conductive nanoparticle, and an electrochromic material attached to the surface of the conductive nanoparticle, wherein the conductive nanoparticle comprises at least two metal compounds, and in addition, to an electrochromic device comprising the electrochromic particle.

Indeed, it has been surprisingly found by the present inventor that a conductive nanoparticle according to the invention can be used as the superior conductive support for electrochromic particle. Also, it has been found that the particular conductive nanoparticle according to the present invention can meet one or more properties required in the art, including superior surface properties, which enables very strong and stable chemical linkage with the electrochromic material attached thereto, great electrical conductivity, and/or excellent transparency.

The conductive nanoparticle for the electrochromic particle is often required to have certain chemical/optical properties, including transparency (high transmittance for visible light), electrical conductivity, and surface properties (to harvest more electrochromic materials on the surface). The conductive core material which can meet all of the required properties in a satisfactory manner has not been available. The present inventor has found that this can be attained by combining two distinct metal compounds to prepare the conductive nanoparticles, which turned out to show excellent optical and/or chemical properties.

In the present invention, "alkyl groups" is understood to denote in particular a straight chain, branched chain, or cyclic hydrocarbon groups usually having from 1 to 20 carbon atoms. Examples of alkyl groups include methyl, ethyl, propyl, isopropyl, butyl, isobutyl, sec-butyl, tert-butyl, pentyl, neopentyl, hexyl, cyclopropyl, cyclobutyl, cyclopentyl, and cyclohexyl.

In the present invention, "aryl groups" is understood to denote in particular any functional group or substituent derived from an aromatic ring. In particular, the aryl groups can have 6 to 20 carbon atoms (preferably 6 to 12 due to its easiness of synthesis at a low cost) in which some or all of the hydrogen atoms of the aryl group may or may not be substituted with other groups, especially alkyl groups, alkoxy groups, aryl groups, aryloxy groups, thioalkoxy groups, heterocycles, amino groups or hydroxyl groups. The aryl groups are preferably optionally substituted phenyl groups, naphthyl groups, anthryl group and phenanthryl group.

In the present invention, "halogenated" is understood to denote in particular at least one of the hydrogen atoms of the following chemical group has been replaced by a halogen atom, preferably selected from fluorine and chlorine, more preferably fluorine. If all of the hydrogen atoms have been replaced by halogen atoms, the halogenated chemical group is perhalogenated. For instance, "halogenated alkyl groups" include (per)fluorinated alkyl groups such as (per)fluorinated methyl, ethyl, propyl, isopropyl, butyl, isobutyl, sec-butyl or tert-butyl; and for instance -CF₃, -C₂F₅, heptafluoroisopropyl (-CF(CF₃)₂), hexafluoroisopropyl (-CH(CF₃)₂) or -CF₂(CF₂)₄CF₃.

In the present invention, "anchoring groups" is understood to denote in particular groups that will facilitate attachment of the electrochromic material onto the surface of the conductive nanoparticle in the present invention. Suitable anchoring groups are for instance selected from, but not limited to, the group consisting of -COOH, -P(O)(OR')₂ (in which R' is independently selected from the group consisting of hydrogen and alkyl groups), -P(=O)(Ra)(OH) (wherein Ra is selected from the groups consisting of optionally branched C1-C18 alkyl groups and optionally substituted C5-C12 aryl groups, and halogenated derivatives thereof), -PO₄(R')₂, -PO₂HRb (wherein Rb is selected from alkyl groups or aryl groups), -SO₃H, -CONHOH, -NO₂, acetylacetonate, acrylic acid derivatives, malonic acid derivatives, rhodanine-3-acetic acid, propionic acid, salicylic acid, formic anhydride, deprotonated forms of the aforementioned groups, salts of said deprotonated forms, and chelating groups with π-conducting character. Particularly preferred anchoring groups in the present invention are -P(O)(OR')₂, especially -P(O)(OH)₂. The acrylic acid derivatives may for instance be selected from groups of formula -CH=C(Rc)-COOH where Rc is selected from H, CN, -COOH and optionally halogenated alkyl groups, preferably from H, CN, -COOH and CF₃. The malonic acid derivatives suitable as anchoring groups may for example be selected from groups of formula -CRd=C(COOH)₂ where Rd is selected from H and optionally halogenated alkyl groups, especially from H and optionally fluorinated alkyl groups.

In the present invention, the two metal compounds in the conductive nanoparticle preferably comprises a first metal compound possessing a first electrical conductivity and a first specific surface area, and a second metal compound possessing a second electrical conductivity and a second specific surface area, respectively, characterized in that at least one of the following criteria (a) and (b) is satisfied :
(a) The first electrical conductivity is not equal to the second electrical conductivity
(b) The first specific surface area is not equal to the second specific surface area

In the present invention, it is preferred that the two metal compounds at least satisfy the above criteria (a).

In the present invention, the electrical conductivity can be determined through the intrinsic volume resistivity of the metal compound. The intrinsic volume resistivity of the metal compound can be measured by the following method. A ceramic cylindrical cell of 0.5 cm² sectional area is packed with 0.5 g of particles of the metal compound, and mounted on a frame fitted with a terminal for connection with a resistance measuring device. Under a pressure of 100 kg/cm² onto a cover fitted with a terminal-equipped press bar (piston-like) applied from upward, the resistance and height of pressurized metal compound particles in the cell are measured. The value of resistance (omega) is calculated per cm and per cm² of sectional area.

In the present invention, the specific surface area can be determined by Brunauer-Emmett-Teller (BET) method.

In the present invention, the first metal compound in the conductive nanoparticle is preferably at least partially coated with the second metal compound. Although degree of the coating is not particularly limited, it would be desirable to coat at least 50 %, preferably at least 70 %, more preferably at least 80 %, still more preferably at least 90 %, of the surface of the first metal compound with the second metal compound.

The process for coating may be conducted by immersing and dispersing or suspending the first metal compound in the solution of the second metal compound or its precursor, and subsequently heating the resultant to remove the solvent. Still, it should be understood that the present invention is not limited thereto.

In the present invention, the conductive nanoparticle which may be prepared by the above coating method may have particle size of from 1 nm to 200 nm, preferably 1 nm to 100 nm, more preferably 5 nm to 50 nm, still more preferably 10 nm to 20 nm. The particle size in the present invention may be determined according to the method of X-ray diffraction. Specific surface area of the conductive nanoparticle in the present invention may be selected from the range from 30 to 200 m²/g, preferably 100 to 180 m²/g, more preferably from 120 to 150 m²/g, as measured by BET method.

In the preferred embodiment of the present invention, the first metal compound in the electrochromic particle is coated with the second metal compound which possesses higher specific surface area than the specific surface area of the first metal compound. Also, it is often preferable that the electrical conductivity of the first metal compound is higher than that of the second metal compound.

In the present invention, each metal compound in the conductive nanoparticle, including the first metal compound and the second metal compound, is preferably selected from metal oxides, respectively. The metal oxide in the present invention is preferably selected from the group consisting of oxides of transition metal and oxides of the metallic elements in Groups 13 to 16 of the periodic table (Al, Ga, In, Sn, Tl, Pb, Bi, and Po). Such metal oxides may be optionally doped with further elements, such as metal element other than one included in the metal oxides, and halogen element, such as fluorine.

Particular examples of the first metal compound in the present invention include those selected from the group consisting of the metallic elements in Groups 13 to 16 of the periodic table (Al, Ga, In, Sn, Tl, Pb, Bi, and Po), mixtures of at least two metallic elements in Groups 13 to 16, chalcogenides, in particular oxides thereof, and any combination thereof. Particularly preferred first metal compound is indium-tin-oxide (In₂O₃:Sn) (ITO) nanoparticle because it displays excellent transparency as well as superior electrical conductivity.

Particle size of the first metal compound can be selected from the range of from 1 nm to 200 nm, preferably 1 nm to 100 nm, more preferably 5 nm to 50 nm, still more preferably 10 to 20 nm. Preferred intrinsic volume resistivity of the first metal compound is no more than 10¹⁰ ohm·cm, more preferably no more than 10⁵ ohm·cm, still more preferably no more than 10⁴ ohm·cm, most preferably selected from the range of from 10³ ohm·cm to 10⁴ ohm·cm. Specific surface area of the first metal compound can be preferably selected from the range of from 30 to 150 m²/g, as measured by BET method.

Particular examples of the second metal compound in the present invention include those selected from the group consisting of transition metals, mixtures of at least two transition metals, chalcogenides, in particular oxides thereof, and any combination thereof. Particularly preferred second metal compound is titanium dioxide (TiO₂) nanoparticle as it shows excellent surface properties, such as high specific surface area, enabling a desirable linkage with the electrochromic material. Particle size of the second metal compound can be selected from the range of from 1 nm to 100 nm, preferably 1 nm to 50 nm, more preferably 1 nm to 10 nm.

According to a particularly preferred embodiment, the conductive nanoparticle of the present invention can be formed by coating titanium dioxide nanoparticle on the surface of indium-tin-oxide nanoparticle, and thus, comprise ITO nanoparticle, surface of which is coated with titanium dioxide nanoparticle.

In the electrochromic particle according to the present invention, at least one electrochromic material is attached to the surface of the conductive nanoparticle. Examples of the electrochromic material are not particularly limited, and include inorganic electrochromic materials, in particular transition metal oxide-based electrochromic materials, such as WO₃, NiO, Nb₂O₅, MoO₃, and V₂O₅, organic electrochromic materials, including conductive polymers, such as those comprising repeating units derived from thiophene, carbazole, phenylene, vinylene, acetylene, aniline, phenylenediamine, and pyrrole monomers, and viologen and derivatives thereof. In the present invention, for the effective linkage between the electrochromic material and the surface of the conductive nanoparticle, it is preferred that the electrochromic material comprises at least one anchoring group. Preferred anchoring group in the present invention includes -COOH and -P(O)(OH)₂.

Preferred electrochromic material in the present invention comprises at least one compound having viologen structure and at least one anchoring group. Examples of such compound can be found, for instance, in the international PCT application publication No. WO 98/35267 A1, but the present invention is not limited thereto. Oligomeric viologen compounds, especially trimeric viologen compounds, possessing at least one anchoring group are often found to be particularly preferred electrochromic material because of their excellent electrochromic properties.

In the present invention, the electrochromic material is usually caused to be adsorbed on the surface of the conductive nanoparticles to form the electrochromic particle according to the present invention. The electrochromic particle can be prepared by any method comprising contacting the electrochromic material and the conductive nanoparticle. For instance, a solution comprising the electrochromic material can be poured into another solution comprising the conductive nanoparticles, or *vice versa,* or solid electrochromic material can be dissolved in a solution comprising the conductive nanoparticles. It may take more than several hours to stabilize the formed linkages between the two compounds. Optionally, one or more additives, such as dispersant, may be used for various purpose, e.g. to increase dispersibiliy in the solution. Additional mechanical force may be used to aid efficient formation of the electrochromic particle. The volume, concentration, and/or pH of each solution can be adjusted to attain efficient formation of the electrochromic particle. It should be understood that the above-described method of forming the electrochromic particle is merely exemplary, and that any other methods for achieving association of the electrochromic material and the conductive nanoparticle known to a person skilled in the art can be properly adopted in the present invention.

Thusly-formed electrochromic particle according to the present invention can attain, in addition to its satisfactory electrochromic properties, such as color-changing or light-shuttering function, excellent electric conductivity and/or sufficient attachment of the electrochromic material to the conductive nanoparticle, which are believed to be substantially beneficial when it is used in the electrochromic device, and thus, can be advantageously used in a wide variety of electrochromic devices, including electrochromic display.

Accordingly, another aspect of the present invention concerns an electrochromic device comprising the electrochromic particle according to the present invention. The electrochromic particle according to the present invention is particularly suitable for the use in display device which at least partially utilizes an electrochromic principle. For instance, the electrochromic particle of the present invention can be used in the state being dispersed in the electrolyte layer which is sandwiched by two electrodes facing each other, as disclosed in United States patent application publication No. US 2014/0118814 A1, but the present invention is not limited thereto.

The following examples are intended to describe the invention in further detail without the intention to limit it.

### Examples

### Example 1 : Preparation of ITO nanoparticle

ITO (In₂O₃:Sn) nano-powders was produced in the following manner.

Starting from dissolved metallic indium in HCl or solution of indium trichloride (InCl₃), a certain amount of tin tetrachloride (SnCl₄) was added as dopant (to obtain In₂O₃ with 5-10 % Sn doping). The acidic (HCl) mother solution was treated with a solution of ammonia (NH₄OH) under stirring at room temperature until a pre-determined pH is reached. The slurry formed by precipitated doped indium hydroxide [In(OH)₃:Sn] was concentrated to a "cake" with a concentration of ca. 20 % solids, and washed several times with deionized water. The final cake was then dried under vacuum first up to 100°C to remove water, and subsequently, the temperature was increased. After several hours at elevated temperature under vacuum, a fine yellow powder was formed (In₂O₃:Sn). This powder consisted of indium oxide doped with 5-10 % tin. Typically it showed a BET specific surface of from 125 to 150 m²/g, and a crystallite size (calculated from XRD measurements) of from 10 to 20 nm.

### Example 2 : Preparation of ITO nanoparticle coated with titanium dioxide nanoparticle

In a second step, 300 g of titanium isopropoxide [Ti(OCHCH₃CH₃)₄] was dissolved in 4 L isopropanol under stirring with dissolver (Ultra Turrax), then 500 g of ITO nano-powder prepared in accordance with Example 1 was added and further stirred to obtain a homogeneous dispersion. The so-obtained suspension was evaporated under reduced pressure by means of a rota-vapor, and the solvent was removed under vacuum for few hours. The obtained product was a fine white-yellowish powder. At this stage, the powder has a specific surface (BET) of 150 m²/g; and XRD shows only crystalline phase of ITO (In₂O₃:Sn) with crystallite size of 15 nm. This yellow powder was heated up to 300°C in air for 1 hour. The crystallite size did not change, and BET specific surface value was reduced to 135 m²/g.

### Example 3 : Preparation of Electrochromic Particle

To a solution where the white-yellowish conductive nanoparticle obtained in Example 2 is dispersed with sodium laurate surfactant, a viologen comprising phosphate anchoring group dissolved in toluene solvent is introduced, placed for more than several hours to proceed the reaction under stirring, and then, the resultant was washed and centrifuged to obtain an electrochromic particle.

The electrochromic device incorporating the electrochromic particle of Example 3 shows excellent light shielding effect as well as fast response time for color change.

## Claims

1. An electrochromic particle comprising a conductive nanoparticle, and an electrochromic material attached to the surface of the conductive nanoparticle, wherein the conductive nanoparticle comprises at least two metal compounds.

2. The electrochromic particle according to claim 1, wherein the metal compound comprises a first metal compound possessing a first electrical conductivity and a first specific surface area and a second metal compound possessing a second electrical conductivity and a second specific surface area, wherein at least one of the following criteria (a) and (b) is satisfied :
(a) the first electrical conductivity is not equal to the second electrical conductivity
(b) the first specific surface area is not equal to the second specific surface area

3. The electrochromic particle according to claim 2, wherein the first metal compound is at least partially coated with the second metal compound.

4. The electrochromic particle according to claim 2 or 3, wherein the first electrical conductivity is higher than the second electrical conductivity, and/or the second specific surface area is higher than the first specific surface area.

5. The electrochromic particle according to any one of claims 2 to 4, wherein the first metal compound and the second metal compound are independently selected from metal oxides.

6. The electrochromic particle according to any one of claims 2 to 5, wherein the first metal compound is selected from the group consisting of the metallic elements in Groups 13 to 16 of the periodic table (Al, Ga, In, Sn, Tl, Pb, Bi, and Po), mixtures of at least two metallic elements in Groups 13 to 16, chalcogenides, in particular oxides thereof, and any combination thereof.

7. The electrochromic particle according to any one of claims 2 to 6, wherein the second metal compound is selected from the group consisting of transition metals, mixtures of at least two transition metals, chalcogenides, in particular oxides thereof, and any combination thereof.

8. The electrochromic particle according to any one of claims 2 to 7, the first metal compound comprises indium-tin-oxide (In₂O₃:Sn) (ITO) nanoparticle, and the second metal compound comprises titanium dioxide (TiO₂) nanoparticle.

9. The electrochromic particle according to any one of claims 2 to 8, wherein each particle size of the first metal compound and the second metal compound is from 1 to 200 nm.

10. The electrochromic particle according to any one of claims 1 to 9, wherein the electrochromic material comprises at least one compound having viologen structure and at least one anchoring group.

11. The electrochromic particle according to any one of claims 1 to 10, wherein the anchoring group is selected from the group consisting of -COOH, -P(O)(OR')₂ (in which R' is independently selected from the group consisting of hydrogen and alkyl groups), -PO₄(R')₂, -SO₃H, -CONHOH, acetylacetonate, acrylic acid derivatives, malonic acid derivative, rhodanine-3-acetic acid, propionic acid, salicylic acid, formic anhydride, deprotonated forms of the aforementioned, salts of said deprotonated forms, and chelating groups with π-conducting character, in particular -P(O)(OR')₂.

12. The electrochromic particle according to any one of claims 1 to 11, wherein BET surface area of the conductive nanoparticle is from 30 to 200 m²/g.

13. The electrochromic particle according to any one of claims 1 to 12, wherein particle size of the conductive nanoparticle is from 1 to 100 nm, preferably 5 to 50 nm.

14. An electrochromic device, comprising the electrochromic particle according to any one of claims 1 to 13.

15. The electrochromic device according to claim 14, which is an electrochromic display.
